# EUROPÄISCHE PATENTANMELDUNG

(11) **EP 4 817 900 A1**
(43) Veröffentlichungstag der Anmeldung: **07.10.2026**
(21) Anmeldenummer: 25168363.7
(22) Anmeldetag: 03.04.2025
(51) Int. Cl.: B60G 17/052

(54) **FAHRZEUGGESPANN UND VERFAHREN ZUM BETRIEB EINES FAHRZEUGGESPANNS**

(71) Anmelder: Schmitz Cargobull AG, 48341 Altenberge (DE)
(72) Erfinder: HEY, Jeffrey, 99867 Gotha (DE)
(74) Vertreter: Liedtke & Partner Patentanwälte

(57) **Zusammenfassung**

Die Erfindung betrifft ein Fahrzeuggespann (100) mit
- einem Zugfahrzeug (200) mit einer vorderen Zugfahrzeugachse (203), einer hinteren Zugfahrzeugachse (204) und einer Anhängerkupplung (201),
- einem Anhänger (300) mit einem durch ein Kupplungsmittel (304) mit einer Stützlast an der Anhängerkupplung (201) am Zugfahrzeug (200) abstützbaren Anhängerfahrgestell (305) sowie einer vorderen Anhängerachse (301) und einer hinteren Anhängerachse (302) und
- einer Steuervorrichtung (400), welche ausgebildet ist, einen Luftdruckwert zumindest einer hinteren Teilfederanordnung (308) der hinteren Anhängerachse (302) in Abhängigkeit einer Achslast der vorderen Zugfahrzeugachse (203) und/oder einer Achslast der hinteren Zugfahrzeugachse (204) derart einzustellen, dass die Achslast der vorderen Zugfahrzeugachse (203) und/oder die Achslast der hinteren Zugfahrzeugachse (204) innerhalb eines vorgegebenen zulässigen Bereichs liegen/liegt.

Die Erfindung betrifft weiterhin ein Verfahren zum Betrieb eines solchen Fahrzeuggespanns (100).

## Beschreibung

Die Erfindung betrifft ein Fahrzeuggespann.

Die Erfindung betrifft weiterhin ein Verfahren zum Betrieb eines Fahrzeuggespanns.

Aus der EP 2 390 121 B1 ist ein Nutzfahrzeug-Anhänger bekannt, mit
- einem durch Kupplungsmittel mit einer Stützlast an einem Zugfahrzeug abstützbaren Chassis,
- einer Mehrfach-Achsanordnung, welche eine erste, vordere Achse und eine zweite hintere Achse enthält,
- einer das Chassis gegen die beiden Achsen abstützenden Luftfederanordnung, welche eine der ersten Achse zugeordnete erste Teilfederanordnung und eine der zweiten Achse zugeordnete zweite Teilfederanordnung enthält,
- einer Sensoranordnung, welche zur Messung der Achsstützkräfte der beiden Achsen eingerichtet ist,
- pneumatischen Steuermitteln, welche zur getrennten Beaufschlagung der beiden Teilfederanordnungen eingerichtet sind, und
- einer Steuereinrichtung, welche zur Ansteuerung der Steuermittel zur Einstellung veränderlicher Luftdruckwerte in den Teilfederanordnungen für gefederte Zustände des Chassis eingerichtet ist.

Die Steuereinrichtung ist zur Durchführung eines Messdurchlaufs eingerichtet und ermittelt dabei mehrere Messwerte, welche von einem Gesamtgewicht und von einer Längsposition eines Schwerpunkts des Gesamtgewichts des Anhängers abhängen. Die Steuereinrichtung leitet aus den Messwerten nach einer gespeicherten Zuordnungsvorschrift Steuerwerte zur Einstellung von Soll-Druckwerten von den Teilfederanordnungen für den Fahrbetrieb ab und stellt Luftdrücke in den Luftfederanordnungen auf die Soll-Druckwerte ein. Die Zuordnungsvorschrift ist so vorgegeben, dass bei Einstellung der danach abgeleiteten Soll-Druckwerte die Stützlast an der Anhängerkupplung des Zugfahrzeugs innerhalb eines vorgegebenen zulässigen Bereichs liegt.

Der Erfindung liegt die Aufgabe zu Grunde, ein neuartiges Fahrzeuggespann und ein neuartiges Verfahren zum Betrieb eines Fahrzeuggespanns anzugeben.

Die Aufgabe wird erfindungsgemäß gelöst durch ein Fahrzeuggespann, welches die im Anspruch 1 angegebenen Merkmale aufweist, und durch ein Verfahren, welches die im Anspruch 10 angegebenen Merkmale aufweist.

Vorteilhafte Ausgestaltungen der Erfindung sind Gegenstand der abhängigen Ansprüche.

Das erfindungsgemäße Fahrzeuggespann weist auf:
- ein Zugfahrzeug, aufweisend
   - ein Fahrgestell,
   - eine vordere Zugfahrzeugachse und eine hintere Zugfahrzeugachse,
   - eine Zugfahrzeugsensorik, welche zur Ermittlung einer Achslast der vorderen Zugfahrzeugachse und/oder einer Achslast der hinteren Zugfahrzeugachse ausgebildet ist, und
   - eine Anhängerkupplung;
- einen Anhänger, aufweisend
   - ein durch ein Kupplungsmittel mit einer Stützlast an der Anhängerkupplung am Zugfahrzeug abstützbares Anhängerfahrgestell,
   - eine vordere Anhängerachse und eine hintere Anhängerachse,
   - eine das Anhängerfahrgestell gegen die beiden Anhängerachsen abstützende Luftfederanordnung, welche eine der vorderen Anhängerachse zugeordnete vordere Teilfederanordnung und eine der hinteren Anhängerachse zugeordnete hintere Teilfederanordnung aufweist,
   - eine Anhängersensorik, welche zur Ermittlung von Achslasten der beiden Anhängerachsen ausgebildet ist, und
   - pneumatische Steuermittel, welche zur getrennten Beaufschlagung der beiden Teilfederanordnungen mit Luft ausgebildet sind; und
- eine Steuervorrichtung, welche ausgebildet ist
   - die Steuermittel zur Einstellung veränderlicher Luftdruckwerte in den Teilfederanordnungen anzusteuern und
   - den Luftdruckwert zumindest der hinteren Teilfederanordnung in Abhängigkeit der Achslast der vorderen Zugfahrzeugachse und/oder der Achslast der hinteren Zugfahrzeugachse derart einzustellen, dass die Achslast der vorderen Zugfahrzeugachse und/oder die Achslast der hinteren Zugfahrzeugachse innerhalb eines vorgegebenen zulässigen Bereichs liegen/liegt.

Unter Anhängern werden vorliegend insbesondere Sattelauflieger und Anhänger mit einer starren Deichsel verstanden, welche einen Teil ihres Gewichts auf die Anhängerkupplung des Zugfahrzeugs verlagern. Beispielsweise ist ein Sattelauflieger mittels eines Königszapfens an einer Sattelplatte eines Sattelzugfahrzeugs gekoppelt.

Es ist allgemein bekannt, dass gesetzliche Vorschriften existieren, welche ein maximales zulässiges Gesamtgewicht von Fahrzeugen und Fahrzeuggespannen, beispielsweise von Zugfahrzeugen mit Anhängern, regeln. Aufgrund der Elektrifizierung von Antriebssträngen von Fahrzeugen und einem Verbau von Akkumulatoren als elektrische Energiespeicher ist das Leergewicht von Fahrzeugen gestiegen. Um eine daraus resultierende Nutzlastverringerung der Fahrzeuge auszugleichen, wurde in Deutschland per gesetzlicher Vorschrift das maximal zulässige Gesamtgewicht um zwei Tonnen erhöht. Da in der Realität die Erhöhung des Leergewichts eines Zugfahrzeugs, beispielsweise eines Sattelzugfahrzeugs, bis zu sechs Tonnen betragen kann, ist die Nutzlast des Zugfahrzeugs sowie des Fahrzeuggespanns trotz Erhöhung des zulässigen Gesamtgewichts reduziert.

Um dennoch eine Nutzlast des Fahrzeuggespanns zu maximieren, ist eine spezielle Konstruktion von Anhängern für Zugfahrzeuge mit elektrischem Antriebsstrang erforderlich. Eine solche Anpassung ist zum einen aufwändig und erhöht zum anderen eine Variantenvielfalt.

Eine weitere Möglichkeit der Anpassung ist eine Anpassung des so genannten Sattelvormaßes bei Sattelzugmaschinen. Das Sattelvormaß beschreibt dabei einen Abstand der Sattelkupplung bzw. Sattelplatte zur Mitte der hinteren Zugfahrzeugachse. Ein korrekt eingestelltes Sattelvormaß ist entscheidend für eine optimale Verteilung der Gewichte über die Achsen des Fahrzeuggespanns, was wiederum Auswirkungen auf die Fahrsicherheit und die Einhaltung gesetzlicher Vorgaben bezüglich der maximal zulässigen Gewichte hat. In der Praxis bedeutet dies, dass das Sattelvormaß derart gewählt sein muss, dass ein Schwerpunkt des beladenen Anhängers nahe an der Sattelkupplung bzw. Sattelplatte bzw. dem Königszapfen liegt, um eine Überlast oder Unterlast an den Achsen zu vermeiden. Dies trägt zur Stabilität des Fahrzeuggespanns bei, erhöht die Verkehrssicherheit und reduziert ein Risiko von Straßenbeschädigungen. Dabei bewirkt eine Erhöhung des Sattelvormaßes, das heißt eine Erhöhung des Abstands der Sattelkupplung vom Mittelpunkt der hinteren Zugfahrzeugachse, eine Erhöhung der Achslast der vorderen Zugfahrzeugachse und eine Verringerung der Achslast der hinteren Zugfahrzeugachse. Die Anpassung durch Veränderung des Sattelvormaßes ist jedoch auch begrenzt, so dass eine maximale Ausnutzung der Nutzlast nicht möglich ist.

Mittels der Einstellung des Luftdruckwerts zumindest der hinteren Teilfederanordnung des erfindungsgemäßen Fahrzeuggespanns wird eine Achslasteinstellung der Anhängerachsen realisiert, durch welche ein Drehpunkt, um welchen die Masse des Anhängers schwenkt, an diesem eingestellt wird. Dabei wird durch Verringerung des Luftdruckwerts der hinteren Teilfederanordnung der Drehpunkt in Richtung Zugfahrzeug verschoben, wodurch ein Hebel, über welchen die hinter dem Drehpunkt befindlichen Massen des Anhängers auf den Drehpunkt wirken, vergrößert wird. Dies bewirkt eine Verringerung der Stützlast des Anhängers an der Anhängerkupplung und daraus folgend eine Verringerung der Achslast der vorderen Zugfahrzeugachse und/oder der Achslast der hinteren Zugfahrzeugachse. Somit kann die Nutzlast des Fahrzeuggespanns maximiert werden. Bei zu großer Entlastung der Anhängerkupplung und daraus folgend zu großer Entlastung der Zugfahrzeugachsen können jedoch Fahreigenschaften des Fahrzeuggespanns negativ beeinflusst werden. Durch die Einstellung des Luftdruckwerts zumindest der hinteren Teilfederanordnung in Abhängigkeit der Achslast der vorderen Zugfahrzeugachse und/oder der Achslast der hinteren Zugfahrzeugachse in der Art, dass die Achslast der vorderen Zugfahrzeugachse und/oder die Achslast der hinteren Zugfahrzeugachse jeweils innerhalb eines vorgegebenen zulässigen Bereichs liegen, wird dagegen in besonders vorteilhafter Weise vermieden, dass die Entlastung des Zugfahrzeugs durch Verringerung des Luftdruckwerts der hinteren Teilfederanordnung zu groß wird. Somit kann bei gleichzeitiger Maximierung der Nutzlast des Fahrzeuggespanns eine negative Beeinflussung der Fahreigenschaften des Fahrzeuggespanns minimiert werden.

Dabei bewirkt die Verringerung des Luftdruckwerts der hinteren Teilfederanordnung eine Reduzierung der Achslast der hinteren Anhängerachse, woraus sich eine proportionale Erhöhung der Achslast der vorderen Anhängerachse ergibt. Daraus resultiert wiederum eine proportionale Verschiebung des Drehpunkts in Richtung des Zugfahrzeugs und eine proportionale Verkürzung eines Radstandes. Dies bewirkt eine proportionale Verringerung der Stützlast des Anhängers an der Anhängerkupplung und daraus folgend eine proportionale Reduzierung der Achslasten der Zugfahrzeugachsen. Das heißt, die Reduzierung der Achslast der hinteren Anhängerachse ist direkt proportional zur Reduzierung der Achslasten der Zugfahrzeugachsen.

In einer möglichen Ausgestaltung des Fahrzeuggespanns kann zwischen der vorderen Zugfahrzeugachse und der hinteren Zugfahrzeugachse eine beliebige Anzahl weiterer Zugfahrzeugachsen angeordnet sein.

In einer weiteren möglichen Ausgestaltung des Fahrzeuggespanns kann zwischen der vorderen Anhängerachse und der hintere Anhängerachse eine beliebige Anzahl weiterer Anhängerachsen angeordnet sein. Die Anzahl weiterer Anhängerachsen ist ebenfalls über die Luftfederanordnung gegen das Anhängerfahrgestell abgestützt, wobei die Luftfederanordnung hierzu eine Anzahl weiterer Teilfederanordnungen aufweist. Durch Einstellung von Luftdruckwerten in den weiteren Teilfederanordnungen sind auch die Achslasten der Anzahl weiterer Anhängerachsen einstellbar.

In einer weiteren möglichen Ausgestaltung des Fahrzeuggespanns ist die Steuervorrichtung ausgebildet, die Einstellung des Luftdruckwerts zumindest der hinteren Teilfederanordnung mittels einer Regelung auszuführen, wobei die Achslast der vorderen Zugfahrzeugachse und/oder die Achslast der hinteren Zugfahrzeugachse jeweils Führungsgrößen oder eine Führungsgröße der Regelung bilden/bildet. Durch diese Regelung wird eine gezielte Beeinflussung der Achslasten des Zugfahrzeugs erreicht.

In einer weiteren möglichen Ausgestaltung des Fahrzeuggespanns ist die Steuervorrichtung ausgebildet, die Einstellung des Luftdruckwerts zumindest der hinteren Teilfederanordnung in Abhängigkeit eines zulässigen Gesamtgewichts des Zugfahrzeugs auszuführen. Hierdurch wird die Beeinflussung der Achslasten des Zugfahrzeugs an das zulässige Gesamtgewicht angepasst, wodurch die Ausnutzung der maximalen Nutzlast des Fahrzeuggespanns bei gleichzeitiger Verringerung der negativen Beeinflussung der Fahreigenschaften des Fahrzeuggespanns maximiert wird.

In einer weiteren möglichen Ausgestaltung des Fahrzeuggespanns ist die Steuervorrichtung ausgebildet, die Einstellung des Luftdruckwerts zumindest der hinteren Teilfederanordnung derart auszuführen, dass eine Stützlast an der Anhängerkupplung des Zugfahrzeugs innerhalb eines vorgegebenen zulässigen Bereichs liegt. Hierdurch wird die Beeinflussung der Achslasten des Zugfahrzeugs an die Stützlast angepasst, wodurch die Ausnutzung der maximalen Nutzlast des Fahrzeuggespanns bei gleichzeitiger Verringerung der negativen Beeinflussung der Fahreigenschaften des Fahrzeuggespanns maximiert wird.

In einer weiteren möglichen Ausgestaltung des Fahrzeuggespanns ist die Steuervorrichtung ausgebildet, die Stützlast an der Anhängerkupplung des Zugfahrzeugs zumindest aus der Achslast der hinteren Zugfahrzeugachse zu ermitteln. Bei Kenntnis der Achslast der hinteren Zugfahrzeugachse im unbeladenen Zustand und weiterer Parameter des Zugfahrzeugs, beispielsweise der Anzahl der Zugfahrzeugachsen und Abstände zwischen diesen, kann die Stützlast beispielsweise sehr genau durch Differenzbildung unter Berücksichtigung der weiteren Parameter aus der Achslast im beladenen Zustand und der Achslast im unbeladenen Zustand ermittelt werden.

In einer weiteren möglichen Ausgestaltung des Fahrzeuggespanns ist vorgesehen, dass
- die Zugfahrzeugsensorik Kraftmesssensoren zur Ermittlung von Achsstützkräften der beiden Zugfahrzeugachsen und/oder Drucksensoren zur Ermittlung von Luftdruckwerten einer das Fahrgestell des Zugfahrzeugs gegen die beiden Zugfahrzeugachsen abstützenden Luftfederanordnung aufweist und
- die Steuervorrichtung und/oder eine Auswerteeinheit ausgebildet sind/ist, aus den Achsstützkräften und/oder den Luftdruckwerten die Achslast der vorderen Zugfahrzeugachse und/oder die Achslast der hinteren Zugfahrzeugachse zu ermitteln.

Dies ermöglicht eine besonders einfache und exakte Ermittlung der Achslast der vorderen Zugfahrzeugachse und/oder der Achslast der hinteren Zugfahrzeugachse mit geringem Hardwareaufwand.

In einer weiteren möglichen Ausgestaltung des Fahrzeuggespanns ist die Steuervorrichtung Bestandteil des Anhängers. Dies ermöglicht es, den Anhänger an verschiedenen Zugfahrzeugen zu nutzen und die Einstellung der Achslast der hinteren Anhängerachse für verschiedene Typen von Zugfahrzeugen mit unterschiedlichen Eigenschaften unter maximaler Ausnutzung der Nutzlast bei gleichzeitiger Optimierung der Achslast der vorderen Zugfahrzeugachse und/oder der Achslast der hinteren Zugfahrzeugachse durchzuführen.

In einer weiteren möglichen Ausgestaltung des Fahrzeuggespanns ist die Steuervorrichtung mittels einer Kommunikationsverbindung mit der Zugfahrzeugsensorik datentechnisch gekoppelt. Dies ermöglicht eine Übertragung der Achslast der vorderen Zugfahrzeugachse und/oder der Achslast der hinteren Zugfahrzeugachse oder die entsprechende Achslast beschreibender Größen an die Steuervorrichtung, damit diese die Einstellung der Achslast der hinteren Anhängerachse unter maximaler Ausnutzung der Nutzlast bei gleichzeitiger Optimierung der Achslast der vorderen Zugfahrzeugachse und/oder der Achslast der hinteren Zugfahrzeugachse durchführen kann.

In einer weiteren möglichen Ausgestaltung des Fahrzeuggespanns weist die Kommunikationsverbindung eine drahtlose Kommunikationsverbindung und/oder drahtgebundene Kommunikationsverbindung auf. Beispiele für derartige Kommunikationsverbindungen sind beispielsweise Datenbusse, zum Beispiel ein CAN-Bus, Funkverbindungen und/oder satellitengestützte Datenverbindungen. Dies ermöglicht eine einfache und sichere Datenübertragung zwischen dem Zugfahrzeug und der Steuervorrichtung.

In dem erfindungsgemäßen Verfahren zum Betrieb eines vorgenannten Fahrzeuggespanns wird der Luftdruckwert zumindest der hinteren Teilfederanordnung in Abhängigkeit der Achslast der vorderen Zugfahrzeugachse und/oder der Achslast der hinteren Zugfahrzeugachse derart eingestellt, dass die Achslast der vorderen Zugfahrzeugachse und/oder die Achslast der hinteren Zugfahrzeugachse innerhalb eines vorgegebenen zulässigen Bereichs liegen/liegt.

In einer möglichen Ausgestaltung des Verfahrens wird die Einstellung des Luftdruckwerts zumindest der hinteren Teilfederanordnung mittels einer Regelung ausgeführt, wobei die Achslast der vorderen Zugfahrzeugachse und/oder die Achslast der hinteren Zugfahrzeugachse jeweils Führungsgrößen oder eine Führungsgröße der Regelung bilden/bildet.

In einer weiteren möglichen Ausgestaltung des Verfahrens wird die Einstellung des Luftdruckwerts zumindest der hinteren Teilfederanordnung in Abhängigkeit eines zulässigen Gesamtgewichts des Zugfahrzeugs ausgeführt.

In einer weiteren möglichen Ausgestaltung des Verfahrens wird die Einstellung des Luftdruckwerts zumindest der hinteren Teilfederanordnung derart ausgeführt, dass eine Stützlast an der Anhängerkupplung des Zugfahrzeugs innerhalb eines vorgegebenen zulässigen Bereichs liegt.

In einer weiteren möglichen Ausgestaltung des Verfahrens wird die Stützlast an der Anhängerkupplung des Zugfahrzeugs zumindest aus der Achslast der hinteren Zugfahrzeugachse ermittelt.

In einer weiteren möglichen Ausgestaltung des Verfahrens ist vorgesehen, dass
- Achsstützkräfte der vorderen Zugfahrzeugachse und/oder Achsstützkräfte der hinteren Zugfahrzeugachse und/oder Luftdruckwerte einer das Fahrgestell des Zugfahrzeugs gegen die vordere Zugfahrzeugachse und/oder die hintere Zugfahrzeugachse abstützenden Luftfederanordnung ermittelt werden und
- aus den Achsstützkräften und/oder den Luftdruckwerten die Achslast der vorderen Zugfahrzeugachse und/oder die Achslast der hinteren Zugfahrzeugachse ermittelt werden/wird.

Das erfindungsgemäße Verfahren und die Ausgestaltungen desselben führen dabei in analoger Weise zu den gleichen Vorteilen wie das erfindungsgemäße Fahrzeuggespann und dessen Ausgestaltungen.

Ausführungsbeispiele der Erfindung werden im Folgenden anhand von Zeichnungen näher erläutert.

Darin zeigen:
- Figur 1: schematisch ein Fahrzeuggespann mit einem Zugfahrzeug und einem Anhänger sowie einen vergrößerten Ausschnitt des Anhängers im Bereich seiner Anhängerachsen bei gleichmäßiger Verteilung eines Gewichts des Anhängers auf alle Anhängerachsen,
- Figur 2: schematisch das Fahrzeuggespann und den vergrößerten Ausschnitt des Anhängers gemäß Figur 1 bei Verringerung einer Achslast einer hinteren Anhängerachse und
- Figur 3: schematisch ein Blockschaltbild des Fahrzeuggespanns gemäß Figur 1 mit einer Kommunikationsverbindung zwischen einer Steuervorrichtung des Anhängers und dem Zugfahrzeug.

Einander entsprechende Teile sind in allen Figuren mit den gleichen Bezugszeichen versehen.

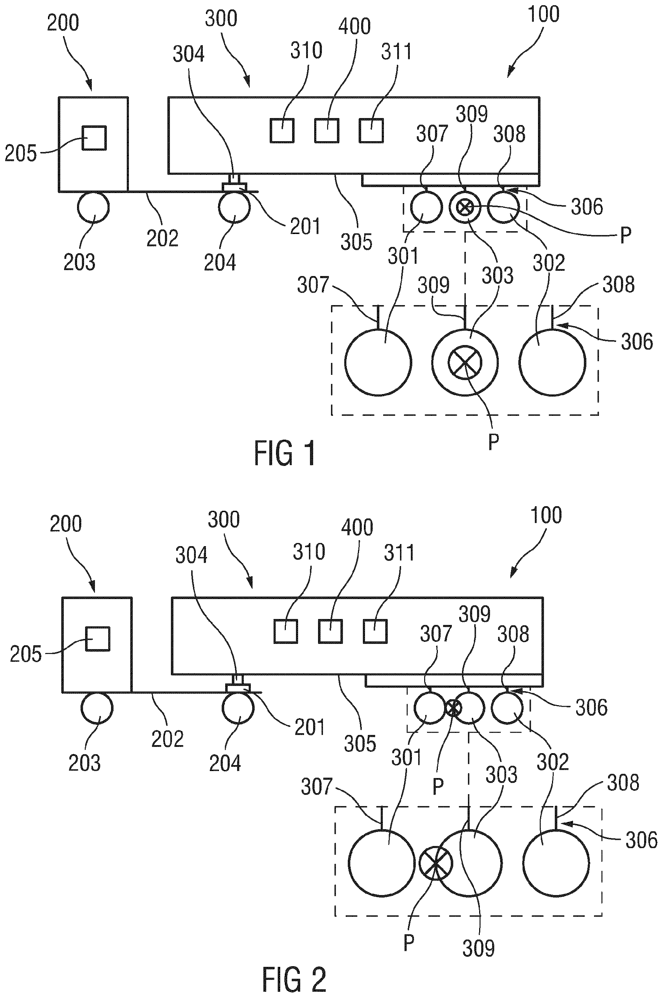

In **Figur 1** sind schematisch ein Fahrzeuggespann 100 mit einem Zugfahrzeug 200 und einem Anhänger 300 sowie ein vergrößerter Ausschnitt des Anhängers 300 im Bereich seiner Anhängerachsen 301 bis 303 bei gleichmäßiger Verteilung eines Gewichts des Anhängers 300 auf alle Anhängerachsen 301 bis 303 dargestellt.

Das Fahrzeuggespann 100 ist im dargestellten Ausführungsbeispiel ein Sattelzug mit einem als Sattelzugfahrzeug ausgebildeten Zugfahrzeug 200 und einem als Sattelauflieger ausgebildeten Anhänger 300.

Das Zugfahrzeug 200 umfasst eine als Sattelkupplung bzw. Sattelplatte ausgebildete Anhängerkupplung 201 und der Anhänger 300 ein als Königszapfen ausgebildetes Kupplungsmittel 304, welches sich mit einer Stützlast an der Anhängerkupplung 201 am Zugfahrzeug 200 abstützt. In nicht näher dargestellten Ausführungsbeispielen kann der Anhänger 300 auch eine starre Deichsel mit einem Kupplungsmittel 304 aufweisen, welches sich an einer korrespondierend zu dem Kupplungsmittel 304 ausgebildeten Anhängerkupplung 201 des Zugfahrzeugs 200 mit einer Stützlast ab stützt.

Das Zugfahrzeug 200 weist ein Fahrgestell 202 und mehrere Zugfahrzeugachsen 203, 204 auf, welche zumindest eine vordere Zugfahrzeugachse 203 und eine hintere Zugfahrzeugachse 204 umfassen. **In** nicht näher dargestellten Ausführungsbeispielen kann das Zugfahrzeug 200 weitere Zugfahrzeugachsen aufweisen. Das Fahrgestell 202 ist dabei auf den Zugfahrzeugachsen 203, 204 abgestützt.

Weiterhin weist das Zugfahrzeug 200 eine Zugfahrzeugsensorik 205 auf, welche zur Ermittlung einer Achslast zumindest einer der beiden Zugfahrzeugachsen 203, 204 ausgebildet ist.

Der Anhänger 300 weist ein Anhängerfahrgestell 305 auf, welches sich über eine Luftfederanordnung 306 auf den Anhängerachsen 301 bis 303 abstützt. Die Anhängerachsen 301 bis 303 umfassen eine vordere Anhängerachse 301, eine hintere Anhängerachse 302 und eine zwischen diesen befindliche weitere Anhängerachse 303. Eine Anzahl von weiteren, zwischen der vorderen Anhängerachse 301 und der hinteren Anhängerachse 302 angeordneten Anhängerachsen 303 kann in nicht näher dargestellten Ausführungsbeispielen von der gezeigten Anzahl abweichen. In einer möglichen Ausgestaltung des Fahrzeuggespanns 100 kann der Anhänger 300 ausschließlich eine vordere Anhängerachse 301 sowie eine hintere Anhängerachse 302 und keine dazwischen befindliche weitere Anhängerachse 303 aufweisen.

Die Luftfederanordnung 306 weist eine der vorderen Anhängerachse 301 zugeordnete vordere Teilfederanordnung 307, eine der hinteren Anhängerachse 302 zugeordnete hintere Teilfederanordnung 308 und eine der weiteren Anhängerachse 303 zugeordnete mittlere Teilfederanordnung 309 auf. Mit den Teilfederanordnungen 307 bis 309 sind pneumatische Steuermittel 311 gekoppelt, welche zur getrennten Beaufschlagung der Teilfederanordnungen 307 bis 309 mit Luft ausgebildet sind.

Weiterhin weist der Anhänger 300 eine Anhängersensorik 310 auf, welche zur Ermittlung der Achslasten der Anhängerachsen 301 bis 303 ausgebildet ist. Zur Ermittlung der Achslasten weist die Anhängersensorik 310 in nicht näher dargestellter Weise Kraftmesssensoren zur Ermittlung von Achsstützkräften der Anhängerachsen 301 bis 303 und/oder Drucksensoren zur Ermittlung von Luftdruckwerten in den Teilfederanordnungen 307 bis 309 auf.

Weiterhin weist das Fahrzeuggespann 100 eine Steuervorrichtung 400 auf, welche im dargestellten Ausführungsbeispiel Bestandteil des Anhängers 300 ist.

Beispielsweise weist das Fahrzeuggespann 100 ein Leergewicht von 19 Tonnen auf, welches sich aus einem Leergewicht des Zugfahrzeugs 200 von 12,5 Tonnen und einem Leergewicht des Anhängers 300 von 6,5 Tonnen zusammensetzt. Dabei bewirkt das Leergewicht des Zugfahrzeugs 200 eine Achslast der vorderen Zugfahrzeugachse 203 von 7,5 Tonnen und eine Achslast der hinteren Zugfahrzeugachse 204 von 5 Tonnen. Das Leergewicht des Anhängers 300 bewirkt eine Stützlast von 1,5 Tonnen an der Anhängerkupplung 201. Der verbleibende Teil des Leergewichts des Anhängers 300 von 5 Tonnen verteilt sich auf alle drei Anhängerachsen 307 bis 309.

Weiterhin weist das Fahrzeuggespann 100 beispielsweise ein zulässiges Gesamtgewicht von 42 Tonnen auf, wobei das Zugfahrzeug 200 beispielsweise ein zulässiges Gesamtgewicht von 20 Tonnen aufweist, bei welchem eine maximale Achslast der vorderen Zugfahrzeugachse 203 9 Tonnen und eine maximale Achslast der hinteren Zugfahrzeugachse 204 11,5 Tonnen betragen. Der Anhänger weist beispielsweise ein zulässiges Gesamtgewicht von 24 Tonnen auf, wobei maximale Achslasten der drei Anhängerachsen 301 bis 303 jeweils 8 Tonnen betragen.

Aus einer Differenz des zulässigen Gesamtgewichts von 42 Tonnen und des Leergewichts von 19 Tonnen ergibt eine maximale mögliche Nutzlast des Fahrzeuggespanns 100 von 23 Tonnen.

Bei einer Beladung des Anhängers 300 mit einem Gewicht von 23 Tonnen und gleichmäßiger Gewichtsverteilung auf alle Anhängerachsen 301 bis 303 ergeben sich beispielsweise folgende Werte:
- Achslast vordere Zugfahrzeugachse 203: 9 Tonnen;
- Achslast hintere Zugfahrzeugachse 204: 12,5 Tonnen;
- Stützlast: 9 Tonnen;
- Achslasten der Anhängerachsen 301 bis 303: jeweils ca. 6,7 Tonnen.

Hieraus ergibt sich ein Gesamtgewicht des Zugfahrzeugs 200 von 21,5 Tonnen und somit eine Überschreitung des zulässigen Gesamtgewichts des Zugfahrzeugs 200, welches 20 Tonnen beträgt. Auch ist die zulässige maximale Achslast der hinteren Zugfahrzeugachse 204, welche 11,5 Tonnen beträgt, überschritten.

Um diese Überschreitung des zulässigen Gesamtgewichts des Zugfahrzeugs 200 und der zulässigen maximalen Achslast der hinteren Zugfahrzeugachse 204 durch eine geänderte Verlagerung des Gewichts des Anhängers 300 zu kompensieren, ist vorgesehen, dass mittels der Steuervorrichtung 400 die pneumatischen Steuermittel 311 zur Einstellung veränderlicher Luftdruckwerte in den Teilfederanordnungen 307 bis 309 derart angesteuert werden, dass der Luftdruckwert in der hinteren Anhängerachse 302 verringert wird.

Hieraus resultiert zumindest eine teilweise Entlastung der hinteren Anhängerachse 302, so dass sich ein Drehpunkt P, um welchen die Masse des Anhängers 300 schwenkt, in Richtung Zugfahrzeug 200 verschiebt. Dies ist in **Figur 2** näher dargestellt. Dadurch wird ein Hebel, über welchen die hinter dem Drehpunkt P befindlichen Massen des Anhängers 300 auf den Drehpunkt P wirken, vergrößert. Dies bewirkt eine Erhöhung der Achslasten der vorderen und weiteren Anhängerachse 301, 303, eine Verringerung der Stützlast des Anhängers 300 an der Anhängerkupplung 201 und daraus folgend eine Verringerung der Achslasten der Zugfahrzeugachsen 203, 204.

Bei der Beladung des Anhängers 300 mit einem Gewicht von 23 Tonnen und Verschiebung des Drehpunkts P in Richtung Zugfahrzeug 200 ergeben sich beispielsweise folgende Werte:
- Achslast vordere Zugfahrzeugachse 203: 8,5 Tonnen;
- Achslast hintere Zugfahrzeugachse 204: 11,5 Tonnen;
- Stützlast: 7,5 Tonnen;
- Achslasten der Anhängerachsen 301, 303: jeweils 8 Tonnen;
- Achslast der hinteren Anhängerachse 302: 5,5 Tonnen.

Hieraus ergibt sich ein Gesamtgewicht des Zugfahrzeugs 200 von 20 Tonnen, so dass das zulässige Gesamtgewicht des Zugfahrzeugs 200 nicht überschritten ist. Auch ist die zulässige maximale Achslast der hinteren Zugfahrzeugachse 204 nicht mehr überschritten. Weiterhin werden die zulässigen maximalen Achslasten der Anhängerachsen 301 bis 303 von jeweils 8 Tonnen nicht überschritten.

Aus den genannten Werten wird ersichtlich, dass die Reduzierung der Achslast der hinteren Anhängerachse 302 eine proportionale Erhöhung der Achslast der vorderen Anhängerachse 301 und der weiteren Anhängerachse 303 bewirkt. Daraus resultiert wiederum eine proportionale Verschiebung des Drehpunkts P in Richtung des Zugfahrzeugs 200 und eine proportionale Verkürzung eines Radstandes. Dies bewirkt eine proportionale Verringerung der Stützlast des Anhängers 300 an der Anhängerkupplung 201 und daraus folgend eine proportionale Reduzierung der Achslasten der Zugfahrzeugachsen 203, 204. Das heißt, die Reduzierung der Achslast der hinteren Anhängerachse 302 ist direkt proportional zur Reduzierung der Achslasten der Zugfahrzeugachsen 203, 204.

Damit mittels der Steuervorrichtung 400 der Luftdruckwert der hinteren Teilfederanordnung 308 der hinteren Anhängerachse 302 in Abhängigkeit der Achslast zumindest einer der beiden Zugfahrzeugachsen 203, 204 derart eingestellt werden kann, dass die Achslast der vorderen Zugfahrzeugachse 203 und/oder die Achslast der hinteren Zugfahrzeugachse 204 innerhalb eines vorgegebenen zulässigen Bereichs liegen/liegt, das heißt die maximale Achslast der vorderen Zugfahrzeugachse 203 und/oder hinteren Zugfahrzeugachse 204 nicht überschritten werden/wird, führt die Steuervorrichtung 400 zur Einstellung des Luftdruckwerts der hinteren Teilfederanordnung 308 ein Regelung aus. Hierbei bilden/bildet die Achslast der vorderen Zugfahrzeugachse 203 oder die Achslast der hinteren Zugfahrzeugachse 204 eine Führungsgröße der Regelung. Alternativ können auch die Achslasten beider Zugfahrzeugachsen jeweils eine Führungsgröße der Regelung bilden.

In möglichen Ausgestaltungen ist die Steuervorrichtung 400 zusätzlich ausgebildet, die Einstellung des Luftdruckwerts der hinteren Teilfederanordnung 308 in Abhängigkeit des zulässigen Gesamtgewichts des Zugfahrzeugs 200 auszuführen und/oder die Einstellung des Luftdruckwerts der hinteren Teilfederanordnung 308 derart auszuführen, dass die Stützlast an der Anhängerkupplung 201 des Zugfahrzeugs 200 innerhalb eines vorgegebenen zulässigen Bereichs liegt. Die Stützlast ermittelt die Steuervorrichtung 400 beispielsweise zumindest aus der Achslast der hinteren Zugfahrzeugachse 204.

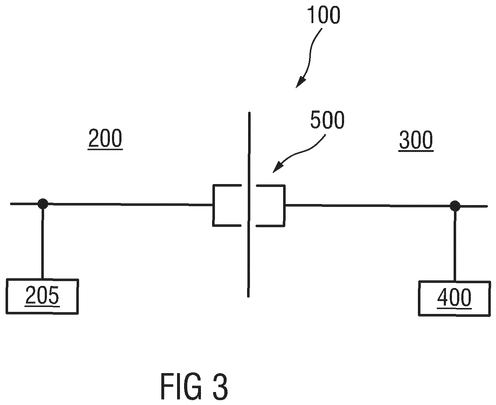

Zur Ausführung der Regelung ist die Steuervorrichtung 400 mittels einer in Figur 3 näher dargestellten Kommunikationsverbindung 500 mit der Zugfahrzeugsensorik 205 datentechnisch gekoppelt, welche die Werte der Führungsgrößen, das heißt der Achslast der vorderen Zugfahrzeugachse 203 und/oder der Achslast der hinteren Zugfahrzeugachse 204 an die Steuervorrichtung 400 überträgt. Weiterhin ist die Steuervorrichtung 400 datentechnisch mit der Anhängersensorik 310 gekoppelt.

Zur Ermittlung der Achslast der vorderen Zugfahrzeugachse 203 und/oder der Achslast der hinteren Zugfahrzeugachse 204 weist die Zugfahrzeugsensorik 205 in nicht näher dargestellter Weise Kraftmesssensoren zur Ermittlung von Achsstützkräften der vorderen und/oder hinteren Zugfahrzeugachse und/oder Drucksensoren zur Ermittlung von Luftdruckwerten einer das Fahrgestell 202 des Zugfahrzeugs 200 gegen die vordere und/oder hintere Zugfahrzeugachse 203, 204 abstützenden Luftfederanordnung auf. Die Steuervorrichtung 400 und/oder eine nicht näher dargestellte Auswerteeinheit sind/ist ausgebildet, aus den Achsstützkräften und/oder den Luftdruckwerten die Achslast der vorderen Zugfahrzeugachse 203 und/oder die Achslast der hinteren Zugfahrzeugachse 204 zu ermitteln.

**In** **Figur 3** ist ein Blockschaltbild des Fahrzeuggespanns 100 gemäß den Figuren 1 und 2 mit einer Kommunikationsverbindung 500 zwischen der Steuervorrichtung 400 des Anhängers 300 und dem Zugfahrzeug 200 dargestellt.

Die Kommunikationsverbindung 500 weist dabei eine drahtlose Kommunikationsverbindung und/oder drahtgebundene Kommunikationsverbindung auf.

Beispielsweise ist die Kommunikationsverbindung 500 eine Datenbus-Verbindung, zum Beispiel eine CAN-Bus-Verbindung.

Die Steuervorrichtung 400 ist beispielsweise ein Steuergerät für ein elektronisches Bremssystem des Anhängers 300, welchem über eine Bremse des Zugfahrzeugs 200 ein elektronisches Signal gesendet wird, in Abhängigkeit dessen Bremsen des Anhängers 300 gesteuert werden.

Aufgrund der datentechnischen Verbindung der Steuervorrichtung 400 mit der Zugfahrzeugsensorik 205 und der Anhängersensorik 310 stehen der Steuervorrichtung 400 Informationen zu einer Ist-Achslast der vorderen Zugfahrzeugachse 203 und/oder zu einer Ist-Achslast der hinteren Zugfahrzeugachse 204 und zu Ist-Achslasten des Anhängers 300, dem zulässigen Gesamtgewicht des Zugfahrzeugs 200 und des Anhängers 300, den zulässigen Achslasten des Zugfahrzeugs 200 und des Anhängers 300 und bei einer Ausbildung als Steuergerät für ein elektronisches Bremssystem des Anhängers 300 weiterhin beispielsweise Informationen zu einer Bremsbelagdicke und weiteren Parametern zur Verfügung.

Über die Kommunikationsverbindung 500 ermittelt die Steuervorrichtung 400 in der Regelung bei Anpassung des Luftdruckwerts der hinteren Teilfederanordnung 308 aus den Daten der Zugfahrzeugsensorik 205 und der Anhängersensorik 310 eine Änderung der Achslasten der Anhängerachsen 301 bis 303 und eine Änderung der Achslast der vorderen Zugfahrzeugachse 203 und/oder eine Änderung der Achslast der hinteren Zugfahrzeugachse 204 und regelt dabei den Luftdruckwert der hinteren Teilfederanordnung 308 derart, dass die Achslast der vorderen Zugfahrzeugachse 203 und/oder die Achslast der hinteren Zugfahrzeugachse 204 innerhalb eines vorgegebenen zulässigen Bereichs liegen/liegt.

### BEZUGSZEICHENLISTE

- 100: Fahrzeuggespann

- 200: Zugfahrzeug
- 201: Anhängerkupplung
- 202: Fahrgestell
- 203: Zugfahrzeugachse
- 204: Zugfahrzeugachse
- 205: Zugfahrzeugsensorik

- 300: Anhänger
- 301: Anhängerachse
- 302: Anhängerachse
- 303: Anhängerachse
- 304: Kupplungsmittel
- 305: Anhängerfahrgestell
- 306: Luftfederanordnung
- 307: Teilfederanordnung
- 308: Teilfederanordnung
- 309: Teilfederanordnung
- 310: Anhängersensorik
- 311: Steuermittel

- 400: Steuervorrichtung

- 500: Kommunikationsverbindung

- P: Drehpunkt

## Patentansprüche

1. Fahrzeuggespann (100) mit
- einem Zugfahrzeug (200), aufweisend
- ein Fahrgestell (202),
- eine vordere Zugfahrzeugachse (203) und eine hintere Zugfahrzeugachse (204),
- eine Zugfahrzeugsensorik (205), welche zur Ermittlung einer Achslast der vorderen Zugfahrzeugachse (203) und/oder einer Achslast der hinteren Zugfahrzeugachse (204) ausgebildet ist, und
- eine Anhängerkupplung (201),
- einem Anhänger (300), aufweisend
- ein durch ein Kupplungsmittel (304) mit einer Stützlast an der Anhängerkupplung (201) am Zugfahrzeug (200) abstützbares Anhängerfahrgestell (305),
- eine vordere Anhängerachse (301) und eine hintere Anhängerachse (302),
- eine das Anhängerfahrgestell (305) gegen die beiden Anhängerachsen (301, 302) abstützende Luftfederanordnung (306), welche eine der vorderen Anhängerachse (301) zugeordnete vordere Teilfederanordnung (307) und eine der hinteren Anhängerachse (302) zugeordnete hintere Teilfederanordnung (308) aufweist,
- eine Anhängersensorik (310), welche zur Ermittlung von Achslasten der beiden Anhängerachsen (301, 302) ausgebildet ist, und
- pneumatische Steuermittel (311), welche zur getrennten Beaufschlagung der beiden Teilfederanordnungen (307, 308) mit Luft ausgebildet sind, und
- einer Steuervorrichtung (400), welche ausgebildet ist
- die Steuermittel (311) zur Einstellung veränderlicher Luftdruckwerte in den Teilfederanordnungen (307, 308) anzusteuern und
- den Luftdruckwert zumindest der hinteren Teilfederanordnung (308) in Abhängigkeit der Achslast der vorderer Zugfahrzeugachse (203) und/oder der Achslast der hinteren Zugfahrzeugachse (204) derart einzustellen, dass die Achslast der vorderen Zugfahrzeugachs (203) und/oder die Achslast der hinteren Zugfahrzeugachse (204) innerhalb eines vorgegebenen zulässigen Bereichs liegen/liegt.

2. Fahrzeuggespann (100) nach Anspruch 1, wobei die Steuervorrichtung (400) ausgebildet ist, die Einstellung des Luftdruckwerts zumindest der hinteren Teilfederanordnung (308) mittels einer Regelung auszuführen, wobei die Achslast der vorderen Zugfahrzeugachse (203) und/oder die Achslast der hinteren Zugfahrzeugachse (204) jeweils Führungsgrößen oder eine Führungsgröße der Regelung bilden/bildet.

3. Fahrzeuggespann (100) nach Anspruch 1 oder 2, wobei die Steuervorrichtung (400) ausgebildet ist, die Einstellung des Luftdruckwerts zumindest der hinteren Teilfederanordnung (308) in Abhängigkeit eines zulässigen Gesamtgewichts des Zugfahrzeugs (200) auszuführen.

4. Fahrzeuggespann (100) nach einem der vorhergehenden Ansprüche, wobei die Steuervorrichtung (400) ausgebildet ist, die Einstellung des Luftdruckwerts zumindest der hinteren Teilfederanordnung (308) derart auszuführen, dass eine Stützlast an der Anhängerkupplung (201) des Zugfahrzeugs (200) innerhalb eines vorgegebenen zulässigen Bereichs liegt.

5. Fahrzeuggespann (100) nach Anspruch 4, wobei die Steuervorrichtung (400) ausgebildet ist, die Stützlast an der Anhängerkupplung (201) des Zugfahrzeugs (200) zumindest aus der Achslast der hinteren Zugfahrzeugachse (204) zu ermitteln.

6. Fahrzeuggespann (100) nach einem der vorhergehenden Ansprüche, wobei
- die Zugfahrzeugsensorik (205) Kraftmesssensoren zur Ermittlung von Achsstützkräften der beiden Zugfahrzeugachsen (203, 204) und/oder Drucksensoren zur Ermittlung von Luftdruckwerten einer das Fahrgestell (202) des Zugfahrzeugs (200) gegen die beiden Zugfahrzeugachsen (203, 204) abstützenden Luftfederanordnung aufweist und
- die Steuervorrichtung (400) und/oder eine Auswerteeinheit ausgebildet sind/ist, aus den Achsstützkräften und/oder den Luftdruckwerten die Achslast der vorderen Zugfahrzeugachse (203) und/oder die Achslast der hinteren Zugfahrzeugachse (204) zu ermitteln.

7. Fahrzeuggespann (100) nach einem der vorhergehenden Ansprüche, wobei die Steuervorrichtung (400) Bestandteil des Anhängers (300) ist.

8. Fahrzeuggespann (100) nach Anspruch 7, wobei die Steuervorrichtung (400) mittels einer Kommunikationsverbindung (500) mit der Zugfahrzeugsensorik (205) datentechnisch gekoppelt ist.

9. Fahrzeuggespann (100) nach Anspruch 8, wobei die
Kommunikationsverbindung (500) eine drahtlose Kommunikationsverbindung und/oder drahtgebundene Kommunikationsverbindung aufweist.

10. Verfahren zum Betrieb eines Fahrzeuggespanns (100) nach einem der vorhergehenden Ansprüche, wobei der Luftdruckwert zumindest der hinteren Teilfederanordnung (308) in Abhängigkeit der Achslast der vorderen Zugfahrzeugachse (203) und/oder der hinteren Zugfahrzeugachse (204) derart eingestellt wird, dass die Achslast der vorderen Zugfahrzeugachse (203) und/oder die Achslast der hinteren Zugfahrzeugachse (204) innerhalb eines vorgegebenen zulässigen Bereichs liegen/liegt.

11. Verfahren nach Anspruch 10, wobei die Einstellung des Luftdruckwerts zumindest der hinteren Teilfederanordnung (308) mittels einer Regelung ausgeführt wird, wobei die Achslast der vorderen Zugfahrzeugachse (203) und/oder die Achslast der hinteren Zugfahrzeugachse (204) jeweils Führungsgrößen oder eine Führungsgröße der Regelung bilden/bildet.

12. Verfahren nach Anspruch 10 oder 11, wobei die Einstellung des Luftdruckwerts zumindest der hinteren Teilfederanordnung (308) in Abhängigkeit eines zulässigen Gesamtgewichts des Zugfahrzeugs (200) ausgeführt wird.

13. Verfahren nach einem der Ansprüche 10 bis 12, wobei die Einstellung des Luftdruckwerts zumindest der hinteren Teilfederanordnung (308) derart ausgeführt wird, dass eine Stützlast an der Anhängerkupplung (201) des Zugfahrzeugs (200) innerhalb eines vorgegebenen zulässigen Bereichs liegt.

14. Verfahren nach Anspruch 13, wobei die Stützlast an der Anhängerkupplung (201) des Zugfahrzeugs (200) zumindest aus der Achslast der hinteren Zugfahrzeugachse (204) ermittelt wird.

15. Verfahren nach einem der Ansprüche 10 bis 14, wobei
- Achsstützkräfte der vorderen Zugfahrzeugachse (203) und/oder der hinteren Zugfahrzeugachse (204) und/oder Luftdruckwerte einer das Fahrgestell (202) des Zugfahrzeugs (200) gegen die vordere Zugfahrzeugachse (203) und/oder die hinteren Zugfahrzeugachse (204) abstützenden Luftfederanordnung ermittelt werden und
- aus den Achsstützkräften und/oder den Luftdruckwerten die Achslast der vorderen Zugfahrzeugachse (203) und/oder die Achslast der hinteren Zugfahrzeugachse (204) ermittelt werden/wird.
